# FASCICULE DE BREVET EUROPEEN

(11) **EP 0 415 820 B1**
(45) Date de publication et mention de la délivrance du brevet: **07.07.1993**
(21) Numéro de dépôt: 90402323.1
(22) Date de dépôt: 21.08.1990
(51) Int. Cl.: F16H 1/28, B60N 2/22

(54) **Mécanisme réducteur pour articulation sans jeu utilisable notamment pour le réglage de diverses parties d'un siège de véhicule automobile**
Untersetzungsmechanismus für ein Gelenk mit Spielausgleich, anwendbar insbesondere zum Verstellen verschiedener Teile eines Fahrzeugsitzes
Reducing mechanism for articulation with backlash elimination, particularly for use in adjusting the various parts of a vehicle seat

(30) Priorité: 31.08.1989 FR 8911443
(43) Date de publication de la demande: 06.03.1991
(73) Titulaire: ETS. COUSIN FRERES, F-61103 Flers Cédex (FR)
(72) Inventeur: Chales, Bernard, F-61100 Aubusson (FR); Judic, Jean-Marc, F-61100 Flers (FR)
(74) Mandataire: Madeuf, Claude Alexandre Jean

(56) Documents cités:
- EP-A- 0 188 616
- EP-A- 0 319 393
- FR-A- 2 592 122
- GB-A- 1 100 887

## Description

On connaît déjà, du fait, en particulier, du FR - A - 2 624 239 appartenant à la Demanderesse, un mécanisme réducteur pour articulation basé sur l'utilisation de deux trains planétaires imbriqués dont l'intérêt est d'éviter, dans la mesure du possible, les jeux inhérents, d'une part, aux tolérances de fabrication et, d'autre part, à l'usure en cours de fonctionnement.

Ce dispositif antérieur qui se compose de deux flasques, l'un fixe, l'autre mobile, qui sont munis chacun d'une denture intérieure, sont fixés, par des moyens divers, l'un (flasque fixe) sur l'armature de l'assise du siège et l'autre (flasque mobile) sur la partie inférieure de l'armature du dossier.

Ce boîtier, ainsi constitué, contient intérieurement quatre satellites comprenant chacun deux dentures extérieures disposées de part et d'autre d'une portée cylindrique et coaxiale aux dentures.

La première denture de chaque satellite est conçue pour engrener simultanément avec la denture d'un des flasques et avec un pignon fou élastique normalement placé au centre du boîtier défini plus haut.

La seconde denture de chaque satellite est conçue pour engrener avec la denture de l'autre flasque et simultanément avec un pignon de commande placé au centre et autocentré par les dentures de ces satellites.

Le pignon de commande est destiné à être relié à l'organe d'entraînement prévu pour effectuer le réglage angulaire entre les deux flasques soit au moyen d'une commande manuelle soit au moyen d'un moteur pouvant être électrique, pneumatique ou autre.

Finalement, on trouve dans cet ensemble une pièce porte-satellites élastique qui est simplement destinée à positionner les satellites et à bloquer les dentures de ceux-ci dans leurs couronnes respectives solidaires d'un des flasques fixe ou mobile.

La réalisation proposée ci-dessus, si elle apporte une solution acceptable au problème des jeux tel que défini dans le préambule, présente cependant deux inconvénients majeurs.

Tout d'abord le porte-satellites, s'il est conçu suffisamment souple et élastique pour rattraper les tolérances de fabrication, est alors insuffisamment rigide et résistant pour accepter des efforts importants et des déformations qui lui sont imposés lorsqu'on applique des charges élevées au mécanisme (couple important entre les deux flasques). Il en résulte une détérioration certaine du système de rattrapage de jeu lors d'une utilisation sévère du mécanisme.

Par ailleurs, en fonctionnement, ces mécanismes présentent, en général, des sensations "granuleuses" à l'organe de commande et parfois même des saccades du fait que l'organe porte-satellites plaque, en permanence, les dentures des satellites dans les dentures des flasques et rend ainsi désagréables et même presque néfastes tous les phénomènes cycliques de passage des dents.

Devant ces faits, il a été procédé à de nouvelles études qui ont révélé que l'on pouvait, par des moyens de fabrication beaucoup plus simples et de montage plus aisés, résoudre les inconvénients mentionnés ci-dessus en permettant une fabrication sûre, meilleur marché, donnant un résultat beaucoup plus fiable dans tous les cas.

Conformément à l'invention, le mécanisme réducteur pour articulation sans jeu, utilisable notamment pour le réglage de diverses parties d'un siège de véhicule automobile, comprend deux flasques, l'un fixe, l'autre mobile comportant chacun intérieurement une denture circulaire ; ces deux dentures intérieures qui peuvent être différentes, sont disposées sur des diamètres voisins et délimitent ainsi un coffret contenant au moins trois satellites présentant chacun deux dentures extérieures disposées de part et d'autre d'une portée cylindrique appelée collerette, la première denture de chaque satellite engrenant avec la denture d'un des flasques et la seconde denture de chaque satellite engrènant avec la denture de l'autre flasque et avec un pignon moteur, flottant par rapport aux flasques et calé sur un arbre de commande, ce mécanisme présentant en outre une pièce porte-satellites en forme d'étoile, caractérisé en ce que chaque satellite présente sur son axe central une portée cylindrique intérieure ou extérieure destinée à se centrer et réagir sur une portée cylindrique complémentaire - respectivement extérieure ou intérieure - prévue sur ladite pièce porte-satellites en forme d'étoile présentant, de par sa matière et sa conception, une élasticité suffisante pour plaquer constamment les dentures des satellites dans la denture de leur flasque respectif, permettant ainsi de rattraper les jeux inhérent à la fabrication de ce type de mécanisme et permettant également d'absorber sans détérioration les surcharges pouvant apparaître au cours de l'utilisation.

Suivant une autre caractéristique de l'invention, on place, d'une manière préférentielle dans le coffret deux pièces porte-satellites en étoile, une contre chaque face latérale des satellites, ceci afin de mieux répartir les efforts sur ces satellites.

Selon une autre caractéristique de l'invention, ce mécanisme réducteur s'autoprotège sous forte charge, du fait que le diamètre des collerettes des satellites est calculé de manière à ce que celles-ci viennent en contact et réagissent entre elles lorsque le mécanisme réducteur est soumis à de fortes charges, protégeant ainsi les porte-satellites en étoile de toute contrainte et déformation nuisible et augmentant ainsi la résistance du mécanisme.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.

La fig. 1 est une vue de face d'un mécanisme réducteur pour articulation, côté flasque mobile (voir ligne I-I de la fig. 2).

La fig. 2 est une coupe diamétrale du mécanisme réducteur pour articulation entièrement montée.

La fig. 3 est une coupe suivant la ligne III-III de la fig. 2.

La fig. 4 est une coupe suivant la ligne IV-IV de la fig. 2, le flasque mobile n'étant représenté que partiellement.

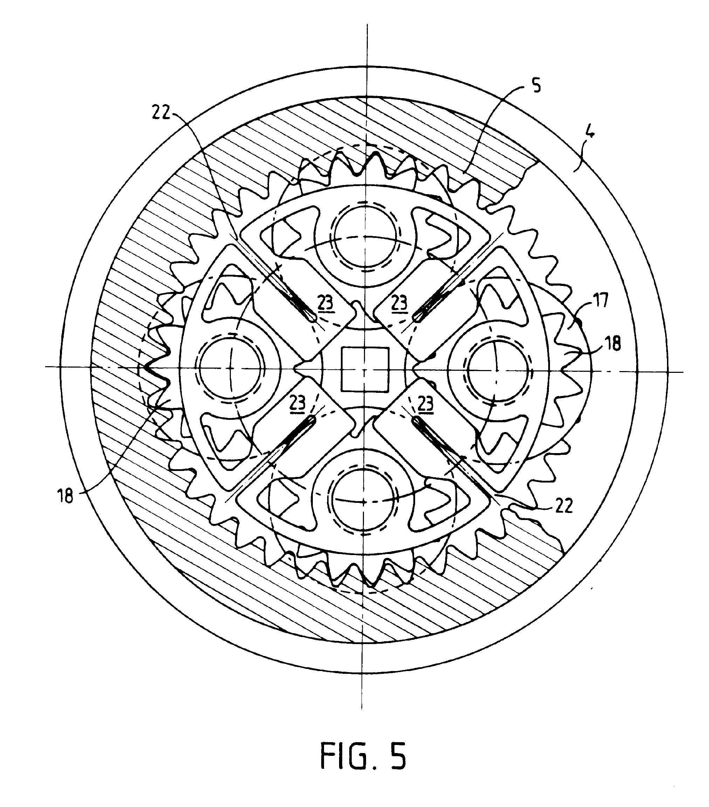

La fig. 5 est une vue correspondant à la fig. 4, le deuxième porte-satellites étant monté.

La fig. 6 montre en plan l'une des pièces porte-satellites.

La fig. 7 est une coupe suivant la ligne VII-VII de la fig. 6.

La fig. 8 est un plan montrant l'un des côtés d'un satellite.

La fig. 9 est une coupe suivant la ligne IX-IX de la fig. 8.

La fig. 10 est un plan d'un satellite, vu du côté opposé à celui de la fig. 8.

La fig. 11 est un plan du pignon de commande.

La fig. 12 est une coupe suivant la ligne XII-XII de la fig. 11.

La fig. 13 est une vue en coupe diamétrale d'une autre réalisation de la liaison satellite/porte-satellites.

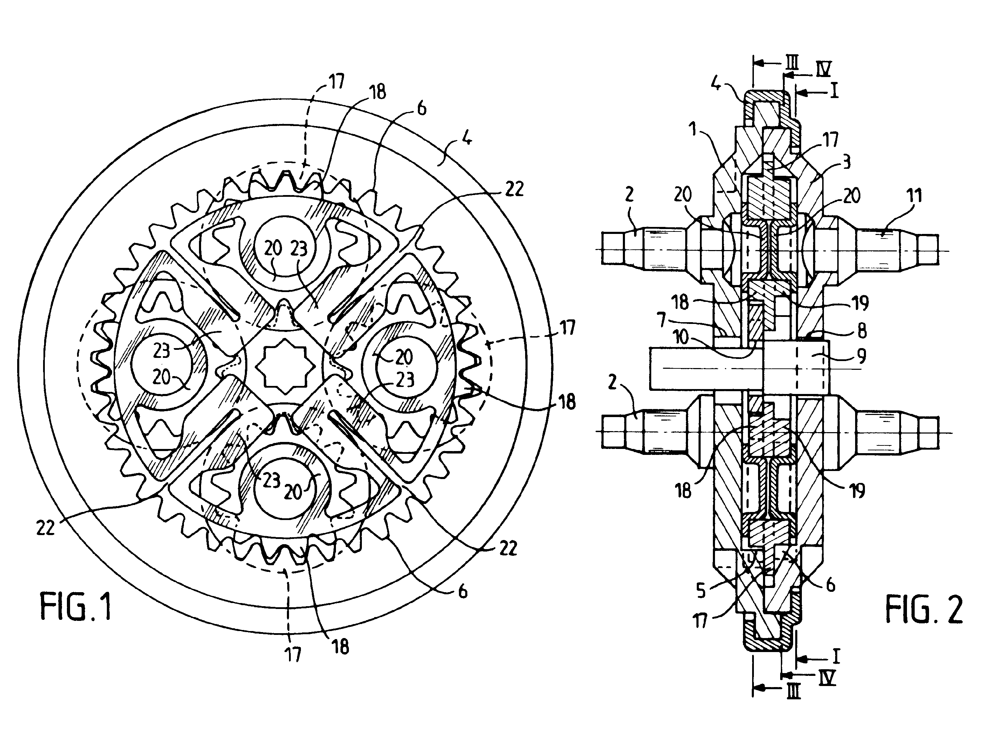

Comme on peut s'en rendre compte aux fig. 1 et 2, le mécanisme réducteur pour articulation se compose essentiellement d'un flasque fixe 1 qui peut être monté sur l'armature d'une assise de siège par des organes de fixation divers 2 disposés à 120° les uns des autres et comportant très souvent entre ces organes de fixation 2 des protubérances, non représentées au dessin, également disposées à 120° les unes des autres et à 60° des organes de fixation pour le maintien parfait du flasque fixe 1 sur l'armature de l'assise. Le flasque mobile 3 est maintenu sur le flasque fixe 1, d'une manière connue en soi, par une bague sertie 4 de façon à permettre la rotation du flasque mobile 3 vis-à-vis du flasque fixe 1. Intérieurement, le flasque fixe 1 comporte une denture circulaire 5, et le flasque mobile 3 une denture circulaire intérieure 6.

Là encore, cette constitution est courante et nécessite peu d'explications supplémentaires.

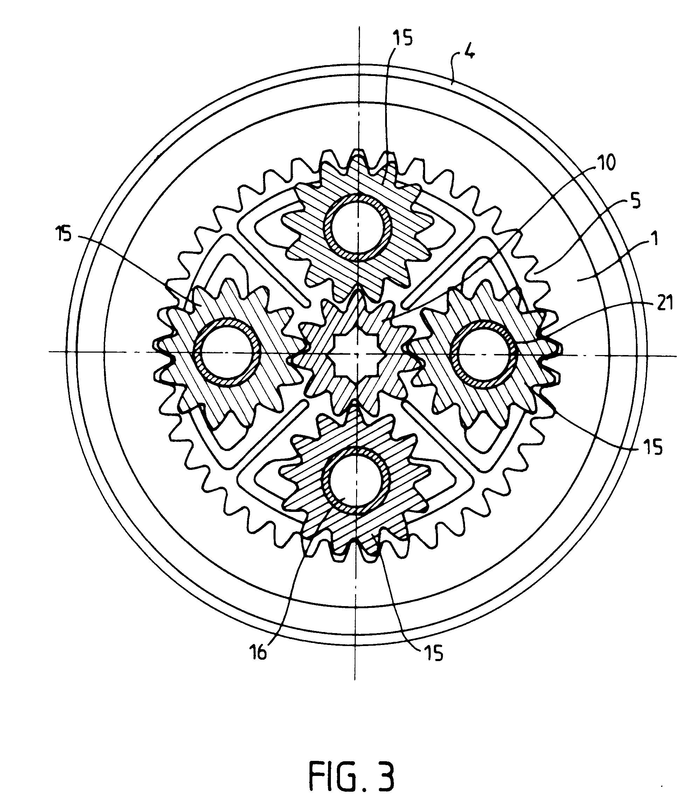

Il est prévu, au centre du flasque fixe 1 et au centre du flasque mobile 3, des trous 7, 8 pour le passage de l'arbre de commande 9 qui entraîne en rotation le pignon moteur 10 (voir également la fig. 3).

Deux remarques s'imposent :
a) l'arbre de commande 9 est polygonal comme cela est très visible à la fig. 3 de façon à permettre un entraînement sans jeu du pignon moteur 10, on pourrait bien sûr réaliser cette liaison par un autre type de construction.
b) cet arbre 9 peut être prolongé, côté intérieur du siège, de façon à recevoir une commande motrice du type moteur électrique ou autre et également la jonction avec l'autre articulation placée sur l'autre côté du siège dans le cas où le siège est muni de deux mécanismes réducteurs d'articulation.

On peut également prévoir une prolongation, côté externe (côté flasque mobile 3) de l'arbre de commande 9 afin que celui-ci reçoive une commande manuelle telle qu'un bouton de manoeuvre d'une manière également usuellement connue.

Finalement, les organes de fixation 11 sont montés sur un cercle médian du flasque mobile 3 pour relier celui-ci à la base de l'armature du dossier du siège considéré.

Comme pour l'assise, des protubérances ou bossages de centrage peuvent être également prévus entre les organes de fixation 11 disposés à 120° les unes des autres.

Bien entendu, les bossages sont répartis sur le même cercle à 60° des organes de fixation 11.

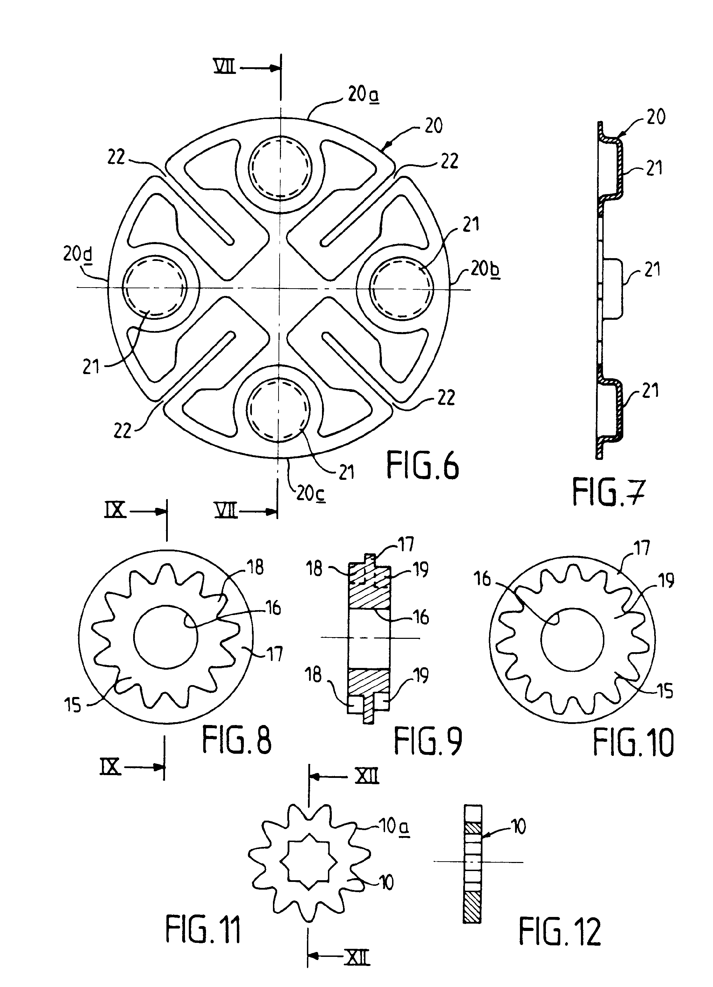

Du fait de la forme particulière des flasques fixe 1 et mobile 3, on voit aisément que lorsque ces deux éléments sont montés l'un dans l'autre le centrage du flasque mobile 3 s'effectuant par la mise en place de ce dernier dans un décolletage circulaire 1a du flasque fixe 1, il est ainsi délimité un espace libre central destiné à contenir quatre satellites 15 disposés à 90° les uns des autres et qui sont réalisés comme le montrent les fig. 8, 9 et 10 par un corps central cylindrique 16 présentant, dans sa zone médiane une portée cylindrique ou collerette 17 centrée par rapport aux dentures 18, 19.

Les quatre satellites sont identiques et seules peuvent les différencier leurs cotes dues à la fabrication.

Le pignon moteur 10 (voir fig. 11 et 12) présente une denture 10a destinée à coopérer, d'une manière aisée, avec les dentures 18 des satellites 15.

Comme déjà indiqué précédemment, l'emmanchement de ce pignon moteur 10 sur l'arbre de commande 9 est ici réalisé par une ouverture polygonale, bien visible à la fig. 11. On assure ainsi une meilleure prise d'entraînement du pignon moteur 10.

Finalement, à l'intérieur de l'espace délimité par les deux flasques fixe 1 et mobile 3 se trouvent deux porte-satellites 20 en étoile et qui sont constitués par un métal résistant et suffisamment élastique, en général un acier à ressort, de bonne qualité puisque utilisé en une mince épaisseur mais suffisante pour résister aux efforts et chocs demandés.

Comme le montre aisément la fig. 6, le porte-satellites 20 se compose de quatre branches 20a, 20b, 20c, 20d, chaque branche présentant en son centre une protubérance 21 tournée vers l'intérieur et destinée à servir d'axe de rotation à chacun des satellites 15. Les branches 20a, 20b, 20c, 20d du porte-satellite 20 en étoile sont séparées par des découpes profondes 22 taillées dans des élargissements 23 de façon à donner une souplesse suffisante à chaque porte-satellites 20 en étoile dans le but de leur permettre d'emmagasiner suffisamment d'énergie élastique du fait d'une précontrainte de montage, et de pouvoir ainsi plaquer efficacement les dentures des satellites dans les dentures des flasques. Ces découpes profondes 22 permettent aussi d'assurer une certaine indépendance entre chacune des branches 20a, 20b, 20c, 20d et de mieux accepter ainsi d'éventuelles variations de cotes entre les satellites 15 ou d'éventuels défauts de cylindricité des dentures des flasques 1 et 3.

Lorsque le mécanisme réducteur pour articulation est monté comme cela est représenté aux fig. 1 et 2, et que l'on désire faire varier la position du dossier du siège considéré par rapport à l'assise, on provoque l'entraînement par les moyens indiqués ci-dessus de l'arbre de commande 9 qui entraîne le pignon 10.

Le mouvement est alors transmis aux satellites doubles 15 qui, d'une manière connue en soi, provoquent la rotation du flasque mobile 3 par rapport au flasque fixe 1 avec le coefficient de réduction déterminé par le choix des nombres de dents des différentes dentures. L'effort des porte-satellites 20 sur les satellites 15 porte sur la zone centrale cylindrique 16 de ces satellites d'une manière continue. Cette disposition permet donc de donner aux collerettes 17 la fonction de protéger les porte-satellites 20 lorsque le mécanisme est sollicité par un couple important entre les deux flasques fixe et mobile 1, 3. Ceci est impossible avec le mécanisme antérieur précité puisque les collerettes extérieures des satellites sont, dans ce cas, directement, en relation avec le système porte-satellites élastique.

En effet, de par l'angle de pression des dentures (généralement en développante de cercle), lorsqu'un couple est appliqué au flasque mobile 3 du mécanisme, il apparaît sur les satellites 15 une composante d'effort radiale (vers le centre) antagoniste à l'effort de poussée du porte-satellites 20. Or, ce porte-satellites doit, de par sa fonction, être suffisamment souple pour accepter les variations de cotes dues aux inévitables tolérances de fabrication et cette composante d'effort était responsable dans le mécanisme ancien, de la destruction du système porte-satellites.

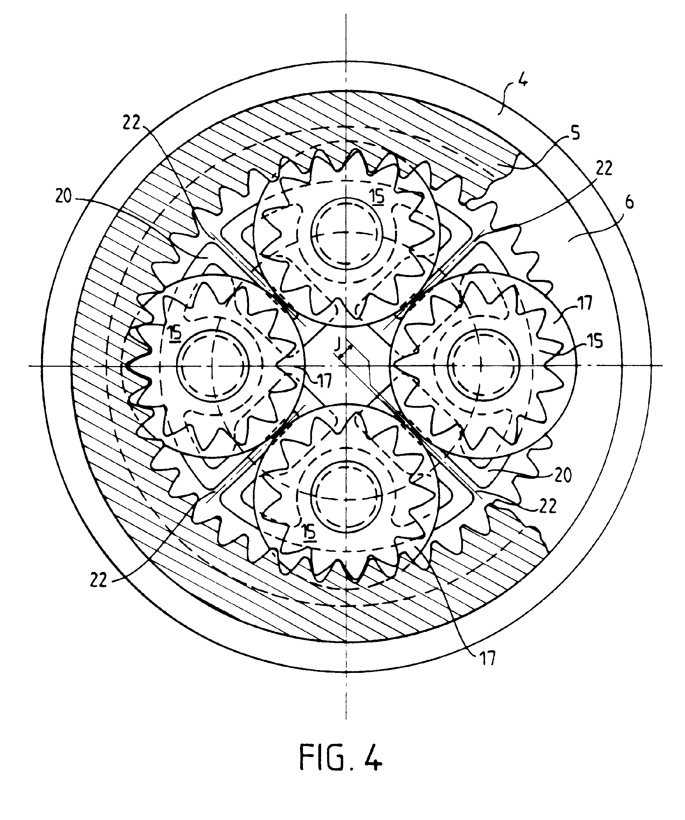

Conformément à l'invention, pour ne pas détruire ni déformer de façon permanente les porte-satellites 20 sous fortes sollicitations du mécanisme, les portées cylindriques 17 ou collerettes extérieures des satellites ont un diamètre tel qu'elles réagissent entre elles sous fortes charges et cela bien avant que les limites de déformations et les contraintes mécaniques admissibles des porte-satellites ressorts soient atteintes. Ceci est illustré à la fig. 4 où l'on peut voir le jeu J entre les collerettes. Ce jeu est faible lorsque le mécanisme n'est pas fortement sollicité et devient nul lorsque la charge sur le flasque mobile 3 devient importante et dépasse une valeur déterminée.

Une telle disposition permet d'augmenter considérablement la tenue des porte-satellites qui conserveront ainsi leur efficacité quelles que soient les sollicitations imposées au mécanisme mais permet aussi d'augmenter la tenue globale du mécanisme puisque, en réagissant entre elles, les portées cylindriques interdisent aux dentures des satellites de se dégager des dentures des flasques. Cette disposition permet, d'autre part, de limiter la flèche mesurable sous un couple important sur le flasque mobile. Pour ce mécanisme sans jeu, on parle alors de rigidité.

On notera donc que, selon la présente invention, les porte-satellites 20 sont conçus de manière à présenter une raideur suffisante pour effectuer le rattrapage des jeux sous les charges correspondant à l'application désirée du produit et présenter une souplesse suffisante pour accepter et compenser les tolérances de fabrication. Ces porte-satellites peuvent par exemple être réalisés dans de l'acier à ressort plat et les portées cylindriques mâles être alors obtenues par emboutissage.

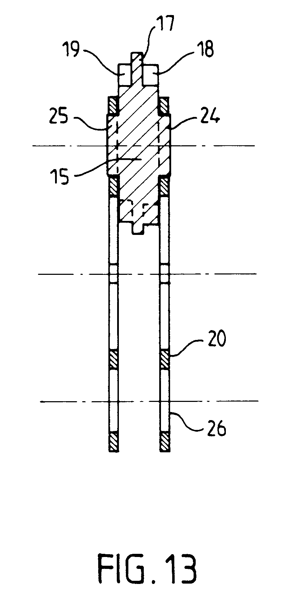

A la fig. 13, on a représenté une variante possible pour la liaison entre les satellites 15 et les porte-satellites 20. Cette variante peut être intéressante pour certains procédés de fabrication, par exemple si les satellites sont fabriqués par extrusion. Comme ceci est visible à la fig. 13, les satellites 15 n'ont pas de trous centraux mais présentent chacun deux portées cylindriques mâles 24 et 25 centrées par rapport aux dentures et qui prennent position et agissent dans les trous cylindriques 26 réalisés dans les porte-satellites 20 à la place des précédentes protubérances 21.

Pour conclure et afin de remédier aux phénomènes cycliques de passage des dents, il est prévu que la combinaison des nombres des dents des différentes dentures soit choisie de manière à éviter que les différents engrènements s'effectuent en phase et génèrent de mauvaises sensations amplifiées par l'action des porte-satellites.

En effet, pour s'assurer de cette disposition, les nombres de dents des dentures des flasques doivent être tels que le plus grand diviseur commun entre le produit des nombres de dents des flasques 1, 3 et le nombre de satellites 15 soit normalement égal à 1 (l'unité). Aux fig. 3 et 4 où le choix des nombres de dents est bien mis en évidence, on constate qu'effectivement les engrènements ne s'effectuent pas en phase afin d'éviter ainsi la création de points durs ou saccades.

## Revendications

1. Mécanisme réducteur pour articulation sans jeu utilisable notamment pour le réglage de diverses parties d'un siège de véhicule automobile qui comprend deux flasques, l'un fixe (1), l'autre mobile (3) comportant chacun intérieurement une denture circulaire (5, 6) pouvant être différente l'une de l'autre mais disposée sur des diamètres voisins, délimitant ainsi un coffret contenant au moins trois satellites (15) présentant chacun deux dentures extérieures (18, 19) disposées de part et d'autre d'une portée cylindrique (17) appelée collerette, la première denture de chaque satellite engrenant avec la denture d'un des flasques et la seconde denture de chaque satellite engrenant avec la denture de l'autre flasque et avec un pignon moteur (10), flottant par rapport aux flasques (1, 3) et calé sur un arbre de commande (9), ledit mécanisme présentant en outre une pièce porte-satellites (20) en forme d'étoile, caractérisé en ce que chaque satellite (15) présente sur son axe central une portée cylindrique (16) intérieure ou extérieure destinée à se centrer et réagir sur une portée cylindrique complémentaire (21) - respectivement extérieure ou intérieure - prévue sur ladite pièce porte-satellites (20) en forme d'étoile présentant, de par sa matière et sa conception, une élasticité suffisante pour plaquer constamment les dentures des satellites dans la denture de leur flasque respectif, permettant ainsi de rattraper les jeux inhérent à la fabrication de ce type de mécanisme et permettant également d'absorber sans détérioration les surcharges pouvant apparaître au cours de l'utilisation.

2. Mécanisme suivant la revendication 1, caractérisé en ce que le diamètre des collerettes (17) des satellites (15) est calculé de manière à ce que ces collerettes (17) viennent en contact et réagissent entre elles lorsque le mécanisme réducteur est soumis à de fortes charges, protégeant ainsi le porte-satellites (20) de toute contrainte et déformation nuisible et augmentant ainsi la résistance du mécanisme en interdisant aux dentures (18, 19) de se dégager des dentures (5, 6) des flasques (1, 3).

3. Mécanisme suivant l'une des revendications 1 ou 2, caractérisé en ce que chaque satellite (15) est positionné et mis en contrainte dans les dentures (5, 6) des flasques (1, 2) par deux pièces porte-satellites (20) en étoile placées dans le coffret, une contre chaque face latérale des satellites (15) afin de mieux répartir les efforts sur ces satellites.

4. Mécanisme suivant l'une des revendications 1 ou 2, caractérisé en ce que pour remédier aux phénomènes cycliques de passage des dents qui génèrent de mauvaises sensations, points durs ou saccades, amplifiées par l'action des porte-satellites (20) élastiques, il est prévu que la combinaison des nombres des dents des différentes dentures soit choisie de manière à éviter que les différents engrènements s'effectuent en phase c'est-à-dire que les nombres de dents des dentures (5, 6) des flasques (1, 3) soient choisis tels que le plus grand diviseur commun entre le produit des nombres des dents des flasques (1, 3) et le nombre de satellites (15) soit égal à 1 (l'unité).

5. Mécanisme suivant l'une des revendications 1 à 4, caractérisé en ce que le porte-satellites (20) se compose de branches (20a, 20b, 20c...), dont le nombre est égal au nombre de satellites (15), qui présentent chacune une protubérance (21) tournée vers l'intérieur, destinée à servir d'axe de rotation à chacun des satellites (15) en se positionnant dans un évidement cylindrique (16) prévu dans chaque satellite (15), et qui sont séparées par des découpes profondes (22) taillées dans des élargissements (23) de façon à donner une souplesse suffisante à chaque porte-satellites (20) dans le but de permettre à ces porte-satellites d'emmagasiner suffisamment d'énergie élastique, grâce à une pré-contrainte de montage, et de pouvoir ainsi plaquer efficacement les dentures des satellites (15) dans les dentures des flasques (1, 3), tout en assurant une certaine indépendance entre chacune de ces branches (20a, 20b, 20c...) et acceptant ainsi mieux d'éventuelles variations de cotes entre les satellites (15) ou d'éventuels défauts de cylindricité des dentures (5, 6) des flasques (1 et 3).

6. Mécanisme suivant l'une des revendications 3 à 5, caractérisé en ce que chaque étoile des porte-satellites (20) est réalisée par emboutissage et découpage en une matière élastique souple telle qu'acier ressort.

7. Mécanisme suivant l'une des revendications 1 à 6, caractérisé en ce que les satellites (15) n'ont pas de trou central (16) mais chacun des satellites possède deux portées cylindriques mâles (24, 25) centrées par rapport aux dentures (18, 19) et qui viennent se positionner et réagir dans des trous cylindriques (26) réalisés dans les porte-satellites (20) à la place desdites protubérances (21).

## Patentansprüche

1. Untersetzungsmechanismus für ein spielfreies Gelenk anwendbar insbesondere zum Verstellen verschiedener Teile eines Automobilfahrzeugsitzes mit zwei Scheiben, von denen eine fest (1) und die andere beweglich (3) ist und von denen eine jede innen eine kreisförmige Verzahnung (5, 6) trägt, welche Verzahnungen voneinander verschieden sein können, aber sich auf benachbarten Durchmessern befinden, und die so ein Gehäuse begrenzen, das wenigstens drei Planetenräder (15) enthält, wobei ein jedes Planetenrad (2) äußere Verzahnungen (18, 19) aufweist, die sich auf der einen und anderen Seite einer als Kranz bezeichneten zylindrischen Lauffläche (17) befinden, wobei die erste Verzahnung eines jeden Planetenrads mit der Verzahnung einer der Scheiben und die zweite Verzahnung eines jeden Planetenrads mit der Verzahnung der anderen Scheibe und mit einem Antriebszahnrad (10) in Eingriff steht, das bezüglich der Scheiben (1, 3) schwimmt und auf eine Betätigungswelle (9) aufgekeilt ist, wobei der beschriebene Mechanismus überdies einen sternförmigen Planetenradträger (20) aufweist, dadurch gekennzeichnet, daß jedes Planetenrad (15) auf seiner zentralen Achse eine innere oder äußere zylindrische Lauffläche (16) aufweist, die dazu bestimmt ist, sich an einer komplementären, jeweils äußeren oder inneren Lauffläche (21) zu zentrieren und dagegenzuwirken, die an dem erwähnten sternförmigen Planetenradträger (20) vorgesehen ist, der durch sein Material und seinen Aufbau eine ausreichende Elastizität hat, um die Verzahnungen der Planetenräder ständig in der Verzahnung ihrer jeweiligen Scheibe in Eingriff zu halten und so das Spiel zu beseitigen erlaubt, das mit der Herstellung dieses Typs von Mechanismus einhergeht, und zugleich die Überlastungen, die während des Betriebs auftreten können, zerstörungsfrei aufzunehmen erlaubt.

2. Mechanismus nach Anspruch 1, dadurch gekennzeichnet, daß der Durchmesser der Kragen (17) der Planetenräder (15) derart berechnet ist, daß die Kragen (17) miteinander in Kontakt kommen und untereinander gegenwirken, wenn der Untersetzungsmechanismus starken Lasten ausgesetzt ist, und so den Planetenträger (20) vor jeglicher schädlichen Spannung und Deformation schützen und so die Widerstandsfähigkeit des Mechanismus erhöhen, indem sie ein Außereingriffkommen der Verzahnungen (18, 19) aus den Verzahnungen (5, 6) der Scheiben (1, 3) verhindern.

3. Mechanismus nach einem der Ansprüche 1 oder 2, dadurch gekennzeichnet, daß ein jedes Planetenrad (15) durch zwei in dem Gehäuse befindliche sternförmige Planetenradträger (20) in den Verzahnungen (5, 6) der Scheiben (1, 2) positioniert und unter Spannung gesetzt ist, und zwar einer gegen eine jede seitliche Stirnfläche der Planetenräder (15), um die Beanspruchungen besser auf die Planetenräder zu verteilen.

4. Mechanismus nach einem der Ansprüche 1 oder 2, dadurch gekennzeichnet, daß um den zyklischen Phänomenen des Durchgangs der Zähne abzuhelfen, die schlechte Empfindungen, harte Punkte oder Rucke erzeugen, die durch die Wirkung der elastischen Planetenradträger (20) verstärkt werden, vorgesehen ist, die Kombination der Zahlen der Zähne der verschiedenen Verzahnungen so zu wählen, daß verhindert wird, daß die verschiedenen Eingriffe in Phase stattfinden, das heißt, daß die Zahlen von Zähnen der Verzahnungen (5, 6) der Scheiben (1, 3) derart gewählt werden, daß der größte gemeinsame Teiler zwischen dem Produkt der Zahlen der Zähne der Scheiben (1, 3) und der Zahl der Planetenräder (15) gleich 1 (Zahl eins) ist.

5. Mechanismus nach einem der Ansprüche 1 bis 4, dadurch gekennzeichnet, daß der Planetenradträger (20) aus Zweigen (20a, 20b, 20c ...) aufgebaut ist, deren Zahl der Zahl der Planetenräder (15) gleich ist und die jeder einen nach innen gerichteten Vorspruch (21) aufweisen, der als Drehachse für ein jedes der Planetenräder (15) zu dienen bestimmt ist, indem der Vorsprung eine Stellung in einer zylindrischen Öffnung (16) einnimmt, die in einem jeden Planetenrad (15) vorgesehen ist, und daß die Zweige durch tiefe Einschnitte (22) getrennt sind, die in Erweiterungen (23) eingeschnitten sind, um so einem jeden Planetenradträger (20) eine hinreichende Nachgiebigkeit zu verleihen zu dem Zweck, den Planetenradträgern genug elastische Energie zu speichern zu erlauben, dank einer Montagevorspannung, und um so die Verzahnungen der Planetenräder (15) wirkungsvoll in den Verzahnungen der Scheiben (1, 3) in Eingriff halten zu können, all das unter Gewährleistung einer gewissen Unabhängigkeit zwischen einem jeden dieser Zweige (20a, 20b, 20c ...) und unter so besserer Verkraftung eventueller Maßschwankungen zwischen den Planetenrädern (15) oder eventueller fehlerhafter Unrundheiten der Verzahnungen (5, 6) der Scheiben (1 und 3).

6. Mechanismus nach einem der Ansprüche 3 bis 5, dadurch gekennzeichnet, daß jeder Stern der Planetenradträger (20) durch Tiefziehen und Schneiden aus einem nachgiebigen elastischen Material wie Federstahl hergestellt ist.

7. Mechanismus nach einem der Ansprüche 1 bis 6, dadurch gekennzeichnet, daß die Planetenräder (15) kein zentrales Loch (16) haben, sondern ein jedes der Planetenräder zwei männliche zylindrische Laufflächen (24, 25) aufweist, die bezüglich der Verzahnungen (18, 19) zentriert sind und in zylindrischen Löchern eine Stellung einnehmen und darin gegenwirken, die anstelle der erwähnten Vorsprünge (21) in den Planetenradträgern (20) ausgebildet sind.

## Claims

1. Reducing mechanism for articulation with backlash elimination, particularly for use in adjusting the various parts of an automobile vehicle seat, which comprises two flanges, one (1) being fixed, the other (3) mobile, each innerly including a circular toothing (5, 6), which can be different from one another but placed on adjacent diameters, defining thus a cabinet containing at least three satellites (15) each having two outer toothings (18, 19) placed on either side of a cylindrical bearing surface (17) so called as a collar, the first toothing of each satellite meshing with the toothing of one of the flanges and the second toothing of each satellite meshing with the toothing of the other flange and with a motive pinion (10), floatingly mounted with respect to the flanges (1, 3) and being wedged on a control shaft (9), said mechanism further having a star shaped satellite-holder part (20), characterized in that each satellite (15) has, on its central axis, a cylindrical inner or outer bearing surface (16) intended for centring itself and reacting on a complementary cyclindrical bearing surface (21) - respectively outer or inner - provided on said star-shaped satellite-holder part (20) having, due to its material and design, a sufficient resiliency for constantly applying the toothings of the satellites in the toothing of their respective flange, thereby enabling to take up backlashes inherent to manufacture of this type of mechanism and enabling also to absorb without deterioration the overloads able to appear during use.

2. Mechanism according to claim 1, characterized in that the diameter of the collars (17) of the satellites (15) is calculated in such manner that these collars (17) will come in contact and react together when the reducing mechanism is subjected to heavy loads, thereby protecting the satellite-holder (20) from any stress and noxious deformation and increasing thus the resistance of the mechanism by preventing the toothings (18, 19) from being disengaged from the toothings (5, 6) of the flanges (1, 3).

3. Mechanism according to one of claims 1 or 2, characterized in that each satellite (15) is positioned and set under stress in the toothings (5, 6) of the flanges (1, 2) by two star-shaped satellite-holder parts (20) placed in the cabinet, one on each side face of the satellites (15), so as to better distribute efforts on these satellites.

4. Mechanism according to one of claims 1 or 2, characterized in that, to remedy the cyclic phenomena due to passage of the teeth which generate disagreable feelings, hard points or jerks amplified by the action of the resilient satellite-holders (20), there is provided that the combination of the number of teeth of the various toothings is selected in order to obviate that the various meshing will be made in phase, that is to say that the numbers of teeth of the toothings (5, 6) of the flanges (1, 3) is selected such as the largest common divider between the product of the numbers of teeth of the flanges (1, 3) and the number of satellites (15) is equal to 1 (the unit).

5. Mechanism according to one of claims 1 to 4, characterized in that the satellite-holder (20) is composed of branches (20a, 20b, 20c, ...), the number of which is equal to the number of satellites (15), which branches each have a protuberance (21) facing toward the inside, intended for being used as a rotation axis for each of the satellites (15) by being positioned in a cylindrical recess (16) provided in each satellite (15), and which are separated by deep cutouts (22) formed in widened portions (23) so as to impart a sufficient flexibility to each satellite-holder (20) for enabling these satellite-holders to store a sufficient resilient energy, due to a mounting prestress, and thereby to be able apply efficiently the toothings of the satellites (15) in the toothings of the flanges (1, 3), while ensuring a certain degree of independence between each of these branches (20a, 20b, 20c,...) and thus better accepting possible variations of sizes between the satellites (15) or possible cylindricity faults of the toothings (5, 6) of the flanges (1 and 3).

6. Mechanism according to one of claims 3 to 5, characterized in that each star of the satellite-holders (20) is made by swaging and cutting of a flexible resilient material such as spring steel.

7. Mechanism according to one of claims 1 to 6, characterized in that the satellites (15) are free of central hole (16), but each of the satellites has two male cylindrical bearing surfaces (24, 25) centred with respect of the toothings (18, 19) and which come in position and react in cylindrical holes (26) formed in the satellite-holders (20) in lieu of said protuberances (21).
